# EUROPEAN PATENT SPECIFICATION

(11) **EP 3 064 619 B1**
(45) Date of publication and mention of the grant of the patent: **18.11.2020**
(21) Application number: 16157295.3
(22) Date of filing: 25.02.2016
(51) Int. Cl.: D01B 7/06, D04H 1/09

(54) **METHOD OF MAKING A HEAT-INSULATING ELEMENT AND HEAT-INSULATING ELEMENT**
VERFAHREN ZUR HERSTELLUNG EINES WÄRMEISOLIERENDEN ELEMENTS UND WÄRMEISOLIERENDES ELEMENT
PROCÉDÉ DE FABRICATION D'UN ÉLÉMENT D'ISOLATION THERMIQUE ET UN TEL ÉLÉMENT

(30) Priority: 27.02.2015 IT BG20150011
(43) Date of publication of application: 07.09.2016
(73) Proprietor: COSETEX S.r.l., 24030 Medolago, Bergamo (IT)
(72) Inventor: MANDELLI, Fabrizio, I-23885 Calco, LECCO (IT); MANDELLI, Silvio, I-23885 Merate, LECCO (IT)
(74) Representative: Hoffmann Eitle

(56) References cited:
- CN-A- 102 978 961
- CN-A- 104 250 876
- CN-U- 202 247 037
- JP-A- H0 319 905
- JP-A- S63 219 611
- IAN HOLME: "Ancient luxury for a technological age", INTERNATIONAL DYER, WORLD TEXTILE PUBLICATIONS, BRADFORD, GB, vol. 195, no. 6, 1 July 2010 (2010-07-01), pages 11-13, XP001582771, ISSN: 0020-658X

## Description

The present invention relates to a method of making a heat-insulating element, a heat-insulating element and a garment or coating comprising such element. More precisely, documents CN 104 250 876 A, CN 102 978 961 A, CN 202 247 037 U, JP S63 219611 A disclose silk products manufacturing methods or silk heat-insulating elements according to the preamble of the enclosed independent claims.

The state of the art, for example the analysis, bibliographies, news or laboratory tests available regarding natural silk products relate substantially totally to "continuous silk." This term means the silk created by "reeling", the processing used to make silk thread - both mechanically and manually - directly from a cocoon in a continuous thread.

Continuous silk production however generates processing residues which are not negligible, which currently lead to production inefficiencies and which could be otherwise exploited to obtain other products of significant economic value and high technical merit.

The present invention relates to the previous context, proposing to provide a method of making a heat-insulating element having an excellent degree of heat-physiological comfort, able to efficiently recycle the silk waste coming from the production of continuous silk, but not only, to make a padding able to combine a very high heat resistance with an equally high permeability index to water vapour.

Such purpose is achieved by a method of making a heat-insulating element comprising the steps of making a padding of essentially pure discontinuous silk, and enclosing said padding between a pair of containment layers to obtain a sandwich structure.

Within the present description the term "essentially pure silk" shall mean a padding constituted by at least 90% by weight of silk, preferably 94 wt% or 97 wt% or more, advantageously constituted of silk for about 99-100% wt.

According to one possible embodiment, the density of such padding may be in the range 20-1000 g / m2, preferably 20-700 g / m2, even more preferably 20-500 g / m2, for example 100-200 g / m2.

Merely by way of example, different variants of such padding may be of 35-250 g / m2 density, 70-300 g / m2, or 80-500 g / m2.

According to a variant, the distribution of fineness (or average diameters) of the discontinuous silk fibres inside the padding is smaller than or equal to 40 micrometers, optionally smaller than or equal to 20 micrometers. According to a further variant, the distribution of fineness may be greater than or equal to at least 5 micrometers.

According to a further variant, one or both containment layers may comprise a fabric, a non-woven fabric and / or a breathable polymer film, selected independently for one or for the other layer.

For example, depending on production contingencies or the destination of the padding, one internal containment layer (that is to say facing towards the user) could be in essentially pure silk, while the opposite-containing layer (or outer) may be made of at least one polymer film, in particular waterproof film.

The fabric may be synthetic, but preferably such fabric is in essentially pure silk according to the definition given above.

Optionally, the thickness of the padding may be in the range 1-50 mm, preferably 1-30 mm.

The step of making the padding comprises steps of:
i) providing a plurality of natural silk waste;
ii) macerating the waste to partially degrade the sericin and fibroin therein contained and to obtain an intermediate mass of discontinuous fibres, which are fibres with a maximum length of approximately 200 millimetres (for example comprised in the range 10-200 or 10-150 millimetres);
iii) subjecting the product of step ii) to carding steps to obtain at least a mat of fibres, or one or more veils of discontinuous silk fibres; and
iv) optionally overlaying and binding a plurality of fibre veils in a direction orthogonal to a surface of said one or more veils to form an interwoven, three-dimensional structure.

The waste products are essentially virgin silk fibres which, for reasons of production technology, do not lend themselves to being processed with the silk spinning system (specifically: by a reeling process) to obtain continuous silk.

According to the invention, the term "waste" shall mean: cocoons at least partially subjected to reeling, uncompleted cocoons, cocoons damaged by external elements, flown cocoons without emerged chrysalides, floss silk fibres, residual filaments on the chrysalis on completion of reeling in continuous silk production, or discontinuous fibres of other kinds.

Preferably, at least part of the waste used in the present invention (e.g. all the waste) come from cocoons of the category Mulberry from Bombyx Mory, Tussah, Eri, Muga or mixtures thereof.

In essence, step ii) makes it possible to achieve a shortening of the molecular chains which constitute the silk fibres, since the adhesive protein sericin is consumed, freeing part of the fibrils of fibroin which constitutes the silk fibre.

Optionally, before the step of macerating, the waste may be mechanically stressed, for example by an operation of beating and cutting, to eliminate the possibly present chrysalides.

According to a first embodiment, step ii) comprises sub-steps of:
- soaking the waste with (twice-)distilled water;
- making the waste and the water react at a temperature of between 100-150°C and pressure of 202.65-1,0130.25 kPa (2-10 atm) for a time equal to or greater than 40 minutes;
- eliminating the (twice-)distilled water containing at least part of the degraded sericin, washing and drying the mass of discontinuous fibres.

For example, the temperature may be between 110 and 135°C, and the reaction time may be of about one hour.

Optionally, the aforesaid washing may be performed at a temperature of about 60°C in deionised water.

According to a second embodiment, step ii) comprises sub-steps of:
- mixing the waste with a mixture in water of a non-surfactant soap (such as Marseilles soap) and sodium carbonate;
- making the waste and the mixture react, raising the temperature up to about 80-90°C for not less than about 1.5 hours (for example about 3 hours);
- removing at least part of the degraded sericin from the mass of discontinuous fibres by washing with water.

According to a preferred embodiment, the waste and the mixture may be reacted for a time of about 2.5-3.5 hours, raising the temperature in about 2.5-3.5 hours up to the aforesaid 80-90°C approx.

The latter variant essentially corresponds to an extreme maceration but under controlled conditions, so as to ensure a good compromise between the elimination of sericin, the obtaining of the detachment of the fibroin fibres, and a non-excessive pulverization of the silk fibre.

According to a variant, the washing with water to remove at least part of the sericin in the second embodiment may be carried out with a first volume at a temperature of about 5-15°C, after which a second volume of wash water could be heated from 10-15°C to about 85-90°C, cooled to 10-15°C and then reheated to about 85-90°C.

Optionally, rinsing with the aforesaid second volume of water may be conducted in two or more steps with volumes of water at decreasing temperature, the starting temperature being about 80-100°C and the final temperature being about 35-40°C. For example, such rinsing may be conducted in four distinct steps.

According to a preferred variant, following the washing step, the method may comprise sub-steps of:
a) mixing the mass of discontinuous fibres with softened water or with an aqueous solution containing sodium silicate;
b) performing one or more steps of bleaching the mixture of the sub-step a) using optionally pure hydrogen peroxide;
c) rinsing the mixture of the sub-step b) with a first and a second volume of water.

With regard to the sub-step a), the variant with the sodium silicate is particularly preferred, since it permits a more controlled and targeted stabilization of the fibre than the variant with only softened water (the latter being characterized preferably by about 1-5 French degrees (°f)), and a better preparation of the product of the sub-step a) for the next bleaching step.

According to a preferred embodiment, the bleaching of the sub-step b) comprises an addition of pure hydrogen peroxide to the mixture of the sub-step a) at a temperature of about 5-15°C, a gradual rise in temperature to about 70-90°C in approximately 50-100 minutes and a reaction time at said temperature of at least 130 minutes.

For example, such an increase could lead up to a temperature of about 80-85°C in about 60-90 minutes, and the reaction time at this temperature could be about 180 minutes.

During the sub-step b) it is important that the hydrogen peroxide is added gradually, so as to avoid a direct reaction of this reagent with the discontinuous fibres so as not to damage them in an uncontrolled manner.

According to a first variant, the first and second volume of water of the sub-step c) are at a temperature of about 5-15°C.

According to a preferred variant, between step ii) and step iii) the method may comprise the following steps:
iia) subjecting the intermediate mass to at least one acid treatment;
iib) drying at least partly the product of step iia) ;
iic) neutralizing (specifically neutralising the pH of) the product of step iib) to consolidate the silk fibres present in such product and preferably reduce the electrostatic charge of the aforesaid mass;
step iii) being performed on the product of step iic) .

At the end of step iic), the fibres are characterized preferably by a conductance of 400-1500 microQ.

Preferably, step iia) is conducted in the presence of sulphuric acid, or an equivalent strong mineral acid.

Even more preferably, step iic) may be performed using ammonia vapours (or alternatively of a primary amine) which invest a mass of previously centrifuged and partially dried fibres.

Following the step iic), in addition to the aforementioned reduction of the electrostatic charge of the intermediate mass of fibres (which guarantees a satisfactory processability in the downstream processing steps) the concomitant effect is also achieved, of removing the vegetable components possibly contained within this mass.

At the end of iic), the consolidation mentioned is carried out through a union of the ramifications of fibroin elements in the fibres, which by effect of the previous steps have come to be created.

To conduct the drying step of the mass of centrifuged fibres a steam dryer could be used for example.

The subsequent step iii) causes a parallelization and an ordering of the individual, discontinuous silk fibres.

According to a preferred embodiment, step iii) comprises a sub-step of parallelization of the discontinuous fibres and a subsequent sub-step of carding into layers.

During the second sub-step, the carding forces do not develop exclusively in the horizontal plane but combine an action on the vertical plane - in a direction incident to the surface of the veil - interweaving the fibres, creating a bond and increasing the population of serum/fibroin fibres at a horizontal and vertical level.

The step of bonding the fibre veils is optional, especially in the case in which upon completion of step iii) a fibre mat is already obtained of the desired thickness and/or characteristics, already suitable to be used as padding.

According to a particularly preferred embodiment, the binding step iv) could comprise one or more needling steps, to transpose the discontinuous silk fibres through the thickness of the fibre veils.

According to one embodiment, the needling step may be carried out with needle combs that penetrate into the texture of the veil, ravel them out and tangle the various veils with each other.

Optionally, prior to step iii), the step iic) product may be subjected to a treatment with a fabric softener, in particular a fabric softener having a gradual action. According to one variant, the fabric softener may be left to act for 12-36 hours, for example for about 24 hours.

For example, the softener may be in diluted form in water, that is to say 5-20% wt, or 7-15% wt.

Following the treatment with fabric softener, and before step iii), a step of drying the mass of fibres with fabric softener may be provided in order to avoid pulverization of the fibres and cause a rounding thereof.

According to an advantageous embodiment, the drying step could be conducted first at a temperature of about 30-60°C, then at a temperature of about 75-95°C and finally at a temperature of 30-60°C.

For example, the drying step could be conducted via a temperature ramp of 45°C, 90°C, 45°C, preferably in a total time of 1-2 hours.

According to a preferred variant, one or both containment layers may be subjected to one or more sanitizing steps, for example by means of silver ions, copper ions, silver alloys or copper alloys, alcohols, aldehydes and/or quaternary ammonium compounds.

Such sanitizing may occur before obtaining the layers: for example, according to the variants which provide for a containment layer in the form of fabric, the threads which such layers are composed of may be sanitized before the weaving step. Or another embodiment provides that the sanitizing is carried out on the finished containment layer.

The present invention further relates to a heat-insulating element comprising a padding of essentially pure discontinuous silk fibres and a pair of containment layers which enclose the padding in a sandwich structure.

Since this element is preferably obtainable by means of the method described above, even where this is not explicitly indicated, preferred or advantageous variants of such element may comprise any structural feature inferable - even implicitly - from the foregoing description.

The padding thus comprises at least one fibre mat or one or more veils of discontinuous silk fibres, such veils being optionally overlaid in a direction orthogonal to a surface of said veils to form an interwoven three-dimensional structure.

The thermo-physiological comfort of the padding (measured according to UNI EN ISO 31092: 1996) is equal to or greater than 0.6, preferably between 0.7 - 0.85.

As a result, such padding has the above-mentioned thermo-physiological comfort by virtue of its thickness and/or heat insulation compartments which the discontinuous fibres are able to create inside the padding.

Even more preferably, one or more fibre veils comprise discontinuous silk fibres which extend in a direction incident to the surface of the fibre veils and which cross the thickness of at least one adjacent fibre veil so as to bind such veils.

The purpose of the present invention will now be illustrated on the basis of a non-limiting example.

EXAMPLE: Production of heat-insulating material in discontinuous natural silk.

The residue, so-called "waste", from continuous silk manufacturing undergoes elimination of any chrysalides present, notably through mechanical beating operations and subsequent maceration.

The maceration comprises a chemical degradation of the sericin and partially of the fibroin in hot water, where the sericin is the adhesive protein of the fibrils constituting the silk filament.

The maceration begins with a mixing of the waste with a mixture in water of a non-surfactant soap (such as Marseilles soap) and sodium carbonate.

For example, 15 litres of Marseille soap and 20 kg of Solvay soda (over 99% pure sodium carbonate) are poured into about 4.000 litres of softened water at an initial temperature of about 5-15 °C.

An additional 8 litres of Marseille soap and 12 kg of Solvay soda are added to the waste and this mixture is then made to react by raising the temperature to about 80-90°C over about 1.5 hours (or 3 hours), and the reaction is continued for at least another 1.5 hours (or 3 hours) at about this temperature. Finally, at least part of the degraded sericin (specifically: substantially all) is eliminated from the mass of discontinuous fibres by rinsing with water (for example two rinses with about 3.500 litres of hard water).

The process continues with the dissolving of about 12 kg of sodium silicate in about 100 litres of softened water at 1-5°f (French degrees), and the dilution of the solution thus obtained in a tank containing about 3500 litres of softened water and about 150-200 kg, or 150-250 kg of the mass of discontinuous fibres.

The temperature of the solution inside the tank is maintained at about 5-15°C.

At a later stage, inside the aforesaid tank one or more bleaching steps are carried out, by introducing hydrogen peroxide, avoiding an immediate reaction with the fibres.

More specifically, about 80 litres of pure hydrogen peroxide are gradually poured into the tank, after which the mixture is reacted for about 20-30 minutes at a temperature of about 5-15°C. The temperature inside the tank is then increased to about 80-85°C in about 60-90 minutes, and the reaction at this temperature is continued for about 180 minutes.

Subsequently, the procedure continues with one or more rinses with a total volume of about 7000 litres of hard water (not softened) at a temperature of 5-15°C, so as to obtain a bulk material.

On the bulk material a reduction of the electrostatic charge is then performed of the material produced at the end of the maceration step, and a simultaneous removal of possible plant parts present.

Specifically, the elimination of the plant parts takes place through a treatment with an acid solution obtained by mixing 4-6 litres of sulphuric acid at 75% in 1000 litres of hard water for about 40-90 minutes, at a temperature of 5 -15°C.

The mass containing the sulphuric acid is then centrifuged, dried, and neutralized as follows.

The centrifuged material is dried in a dryer and then partially neutralized by placing it in closed cells in aerial contact with low doses of ammonia and implementing a forced ventilation, alternating steam humidification steps with at least one violent heating step and resting of the material. The presence of water vapour at this stage makes it possible to heat the environment, and regulate humidity.

For the approximately 200-250 kg of fibre material obtained in various batches following the elimination of the plant parts, about 5 litres of 80% ammonia under ventilation is used and heating is carried out at about 90°C then leaving such material to cool to ambient temperature.

At the end of the neutralization step, a consolidation of the fibre occurs in the neutralized material in which the components of fibroin present are branched and structured by effect of the aforesaid stages.

On the fibres at room temperature a gradual action fabric softener solution is then applied by spraying containing about 10% of fabric softener in hard water leaving it to act for about 24 hours. The ratio of fabric softener solution and the mass of fibres is about 3-6 litres of solution for about 150-200 kg of fibre mass.

The mass containing the fibres and the fabric softener is then dried bringing it to temperatures of about 45°C for 20 minutes, then 90°C for 20 minutes, and finally 45°C for 20 minutes.

The mass dried in the previous step is then subjected to orthogonal carding in layers, in which the individual silk fibres are parallelized and ordered.

During such carding the fibre mass is initially cut (for example by a mechanical cutter) and then parallelized using opening machines and parallelizing machines called "cardalupo": this operation combines tearing, cutting and opening of the fibre, executing these operations several times on the same batch of material so as to progressively reduce the random distribution of the fibres.

The material obtained in the previous processing is sent for carding in layers where, by means of subsequent and repeated passages in rollers with a dense arrangement of needles, the fibres are opened and parallelized creating a first veil.

The forces do not only develop on the horizontal plane but combine an action on the vertical plane perpendicular to the plane of the veil, weaving the fibres, creating a bond and increasing the population of serum/fibroin fibres at a horizontal and vertical level.

A series of veils is thus obtained by means of the operations described above, which are then overlaid and, having reached a desired thickness, are needled to bind them through the thickness.

This way the natural discontinuous silk padding is obtained.

Innovatively, the method of the present invention makes it possible to brilliantly achieve the objectives mentioned initially.

More precisely, this method makes it possible to exploit secondary raw materials of silk production, so as to make a padding with valuable technical characteristics, in particular with regard to the thermo-physiological index.

More precisely, for the same index, the padding of the present invention is thinner and/or lighter, compared to synthetic or feather padding.

Advantageously, the heat-insulating element of the present invention possesses a number of desirable features, including excellent breathability, a high capacity to absorb water and water vapour produced by perspiration without giving a feeling of wetness, high resistance tensile strength, toughness to mechanical stresses, excellent flexibility and lightness and softness hard to equal with synthetic or other fibres.

Advantageously, the padding described above has marked bacteriostatic properties, so that it is able to act as a "filter" for the air transiting through its thickness.

Advantageously, the containment layers reduce the migration phenomena in the padding, in particular by protecting, stabilizing and preventing an undesired leakage of the silk fibres.

In addition, the presence of the containment layers makes it possible to partially sanitize the air transiting through the padding.

Advantageously, the heat-insulating element of the present invention possesses considerable characteristics of biocompatibility, and is a natural product with marked antioxidant characteristics.

Advantageously, the discontinuous fibres show a greater capacity in capturing greater quantities of air, a greater part of the moisture level in excess in the interstices between the various fibrils and ensure internal ventilation better able to let the moisture evaporate to the outside. The discontinuous fibres of the present invention subjected to treatments exponentially raise the presence of such amorphous phases, greatly reducing the crystalline areas.

Advantageously, compared to the known continuous silk padding (so-called *"floss"* padding), the padding described above permits a much higher presence of fibroin fibrils to be obtained and thus the greater thermo-physiological comfort mentioned.

## Claims

1. Method of making a heat-insulating element (6) comprising the steps of:
- making a padding of essentially pure discontinuous silk, composed of at least 90% in weight of silk; and
- enclosing said padding between a pair of containment layers to make a sandwich structure;
the step of making the padding comprising the steps of:
i) providing a plurality of natural silk waste;
ii) macerating the waste to partially degrade the sericin and fibroin therein contained and to obtain an intermediate mass of discontinuous fibres;
iii) subjecting the product of step ii) to carding steps to obtain at least a mat of fibres, or one or more veils of discontinuous silk fibres;
iv) optionally overlaying and binding a plurality of fibre veils in a direction orthogonal to a surface of said one or more veils to form an interwoven three-dimensional structure;
said method being **characterized in that** said natural silk waste of step i) are cocoons at least partially subjected to reeling, uncompleted cocoons, cocoons damaged by external elements, flown cocoons without emerged chrysalides, floss silk fibres, residual filaments on the chrysalis on completion of reeling in continuous silk production, or discontinuous silk fibres of other kinds, and **in that** the discontinuous fibres of the intermediate mass are fibres with a maximum length of approximately 200 millimetres.

2. Method according to the previous claim, comprising, between step ii) and step iii), the following steps:
iia) subjecting the intermediate mass to at least one acid treatment;
iib) drying at least partly the product of step iia);
iic) neutralizing the product of step iib) to consolidate the silk fibres present in such product and reduce the electrostatic charge of the aforesaid mass;
step iii) being performed on the product of step iic).

3. Method according to the previous claim, wherein the step iia) is conducted in the presence of sulphuric acid, and wherein the step iic) is performed using ammonia vapours, or a primary amine vapour, which strike a mass of previously centrifuged and partially dried fibres.

4. Method according to any of the previous claims, wherein the step ii) comprises sub-steps of:
- mixing the waste with a mixture in water of a non-surfactant soap and sodium carbonate;
- making the waste and the mixture react, raising the temperature up to about 80-90°C for not less than about 3 hours;
- removing at least part of the degraded sericin from the mass of discontinuous fibres by washing with water.

5. Method according to the previous claim, wherein, following the washing step, the method comprises sub-steps of:
a) mixing the mass of discontinuous fibres with softened water, **characterised by** 1 -5°f or with an aqueous solution containing sodium silicate;
b) performing one or more steps of bleaching the mixture of the sub-step a) using pure hydrogen peroxide;
c) rinsing the mixture of the sub-step b) with a first and a second volume of water.

6. Method according to the previous claim, wherein the bleaching of the sub-step b) comprises an addition of pure hydrogen peroxide to the mixture of the sub-step a) at a temperature of about 5-15°C, a gradual rise in temperature to about 70-90°C in approximately 50-100 minutes, and a reaction time at said temperature of at least 130 minutes, for example, about 170-190 minutes.

7. Method according to claims 5 or 6, wherein the first and second volume of water of sub-step c) are at a temperature of about 5-15°C.

8. Method according to claims 1-3, wherein said step ii) comprises sub-steps of:
- soaking the waste with (bi-)distilled water;
- making the waste and the water react at a temperature of between 100-150°C and pressure of 202.65-1,0130.25 kPa (2-10 atm) for a time equal to or greater than 40 minutes;
- eliminating the (bi-)distilled water containing at least part of the degraded sericin, washing and drying the mass of discontinuous fibres.

9. Method according to any of the previous claims, wherein the binding step iv) comprises one or more needling steps, to transpose the discontinuous silk fibres through the thickness of the fibre veils.

10. Method according to any of the previous claims, comprising one or more steps of sanitizing one or both containment layers, wherein at least one containment layer comprises a textile and wherein at least one sanitizing step is performed on the yarn of said textile, before a weaving step.

11. Method according to any of the previous claims, wherein the discontinuous fibres of other kinds are virgin silk fibres which do not lend themselves to being processed with the silk spinning system to obtain continuous silk.

12. Method according to any of the previous claims, wherein at least part of the waste comes from cocoons of the category Mulberry from Bombyx Mory, Tussah, Eri, Muga or mixtures thereof.

13. Heat-insulating element comprising a padding of essentially pure discontinuous silk fibres, consisting of at least 90% in weight of silk, and a pair of containment layers which enclose said padding in a sandwich structure;
the padding comprising at least one fibre mat or one or more veils of discontinuous silk fibres, said one or more veils being optionally overlaid in a direction orthogonal to a surface of said veils to form an interwoven three-dimensional structure;
said element being **characterized in that** the discontinuous fibres have a maximum length of approximately 200 millimetres and the thermo-physiological comfort of the padding, measured according to UNI EN ISO 31092:1996, is equal to or greater than 0.6, said padding having said thermo-physiological comfort by virtue of its thickness and heat insulation compartments which the discontinuous fibres are able to create inside the padding.

14. Heat-insulating element according to the previous claim, wherein:
- the thermo-physiological comfort of the padding is between 0.7 -0.85;
- one or more fibre veils comprise discontinuous silk fibres which extend in a direction incident to the surface of the fibre veils and which cross the thickness of at least one adjacent fibre veil so as to bind said veils; and/or
- the density of the padding is in the range 20-1000 g/m2.

## Patentansprüche

1. Verfahren zur Herstellung eines wärmeisolierenden Elements (6), umfassend die Schritte:
- Herstellen einer Polsterung aus im Wesentlichen reiner diskontinuierlicher Seide, bestehend aus mindestens 90 Gewichts-% Seide; und
- Einschließen der Polsterung zwischen einem Paar Einschließungsschichten, so dass eine Sandwichstruktur hergestellt wird;
wobei der Schritt des Herstellens der Polsterung die Schritte umfasst:
i) Bereitstellen einer Vielzahl von Naturseideabfällen
ii) Mazerieren des Abfalls, um das darin enthaltene Sericin und Fibroin teilweise abzubauen und eine Zwischenmasse aus diskontinuierlichen Fasern zu erhalten;
iii) Unterziehen des Produkts aus Schritt ii) mehreren Kardierschritten, um mindestens eine Fasermatte oder einen oder mehrere Schleier aus diskontinuierlichen Fasern zu erhalten;
iv) gegebenenfalls Übereinanderlegen und Verbinden einer Vielzahl von Faserschleiern in einer Richtung orthogonal zu einer Oberfläche aus einem oder mehreren Schleiern, um eine durchwirkte dreidimensionale Struktur zu bilden;
worin das Verfahren **dadurch gekennzeichnet ist, dass** der Naturseideabfall aus Schritt i) aus Kokons, die zumindest teilweise einem Aufwickelschritt unterzogen wurden, unvollständigen Kokons, Kokons, die durch äußere Umstände beschädigt wurden, geflogenen Kokons ohne ausgetretene Chrysaliden, Schappeseidenfasern, Restfilamenten auf den Chrysaliden nach dem Aufwickeln in der kontinuierlichen Seidenproduktion, oder diskontinuierlichen Seidenfasern anderer Art, besteht und dass die diskontinuierlichen Fasern der Zwischenmasse Fasern mit einer maximalen Länge von ungefähr 200 Millimetern sind.

2. Verfahren gemäß dem vorherigen Anspruch, umfassend zwischen Schritt (ii) und Schritt (iii) die folgenden Schritte:
iia) Unterziehen der Zwischenmasse mindestens einer Säurebehandlung;
iib) mindestens teilweise Trocknen des Produkts aus Schritt iia);
iic) Neutralisieren des Produkts aus Schritt iib), um die in diesem Produkt vorhandenen Seidenfasern zu verfestigen und die elektrostatische Ladung der besagten Masse zu verringern; worin Schritt iii) am Produkt aus Schritt iic) durchgeführt wird.

3. Verfahren gemäß dem vorherigen Anspruch, worin der Schritt iia) in der Gegenwart von Schwefelsäure durchgeführt wird und worin der Schritt iic) unter Verwendung von Ammoniakdämpfen oder Dämpfen eines primären Amins durchgeführt wird, die auf die Masse der zuvor zentrifugierten und teilweise getrockneten Fasern auftreffen.

4. Verfahren gemäß einem der vorherigen Ansprüche, worin der Schritt ii) die Unterschritte umfasst:
- Mischen des Abfalls mit einem Gemisch aus einer nichttensidischen Seife und Natriumcarbonat in Wasser;
- Umsetzen des Abfalls und des Gemischs, Erhöhen der Temperatur auf etwa 80-90 °C für nicht weniger als etwa 3 Stunden;
- Entfernen mindestens eines Teils des abgebauten Sericins aus der Masse aus diskontinuierlichen Fasern durch Waschen mit Wasser.

5. Verfahren gemäß dem vorherigen Anspruch, worin das Verfahren nach dem Waschschritt die Unterschritte umfasst:
a) Mischen der Masse aus diskontinuierlichen Fasern mit enthärtetem Wasser, **gekennzeichnet durch** 1-5 °f oder mit einer wässrigen Lösung, enthaltend Natriumsilikat;
b) Durchführen von einem oder mehreren Bleichschritten des Gemischs aus Unterschritt a) unter Verwendung von reinem Wasserstoffperoxid;
c) Waschen des Gemischs des Unterschritts b) mit einem ersten und einem zweiten Wasservolumen.

6. Verfahren gemäß dem vorherigen Anspruch, worin das Bleichen des Unterschritts b) eine Zugabe von reinem Wasserstoffperoxid zum Gemisch des Unterschritts a) bei einer Temperatur von etwa 5-15 °C, einen allmählichen Temperaturanstieg auf etwa 70-90 °C in ungefähr 50-100 Minuten und eine Reaktionszeit von mindestens 130 Minuten, zum Beispiel 170-190 Minuten, bei dieser Temperatur umfasst.

7. Verfahren gemäß den Ansprüchen 5 oder 6, worin das erste und das zweite Wasservolumen des Unterschritts c) mit einer Temperatur von etwa 5-15 °C vorliegen.

8. Verfahren gemäß den Ansprüchen 1-3, worin der Schritt ii) die Unterschritte umfasst:
- Einweichen des Abfalls mit (zweifach) destilliertem Wasser;
- Umsetzen des Abfalls und des Wassers bei einer Temperatur zwischen 100-150 °C und einem Druck von 202,65-1.0130,25 kPa (2-10 atm) für eine Zeit, die gleich oder größer ist als 40 Minuten;
- Entfernen des (zweifach) destillierten Wassers, das mindestens einen Teil des abgebauten Sericins enthält, Waschen und Trocknen der Masse aus diskontinuierlichen Fasern.

9. Verfahren gemäß einem der vorherigen Ansprüche, worin der Verbindungsschritt iv) einen oder mehrere Vernadelungsschritte umfasst, um die diskontinuierlichen Seidenfasern durch die Dicke des Faserschleiers zu befördern.

10. Verfahren gemäß einem der vorherigen Ansprüche, umfassend einen oder mehrere Desinfektionsschritte einer oder beider Einschließungsschichten, worin mindestens eine Einschließungsschicht ein Textil umfasst und worin mindestens ein Desinfektionsschritt am Garn des Textils vor einem Webschritt durchgeführt wird.

11. Verfahren gemäß einem der vorherigen Ansprüche, worin die diskontinuierlichen Fasern anderer Art frische Seidenfasern sind, die sich nicht dazu eignen, mit dem Seidenspinnsystem verarbeitet zu werden, um kontinuierliche Seide zu erhalten.

12. Verfahren gemäß einem der vorherigen Ansprüche, worin mindestens ein Teil des Abfalls von Kokons der Gattung Maulbeere von Bombyx Mory, Tussah, Eri, Muga oder Gemische davon, stammt.

13. Wärmeisolierendes Element, umfassend eine Polsterung aus im Wesentlichen reinen diskontinuierlichen Seidenfasern, bestehend aus mindestens 90 Gewichts-% Seide und einem Paar Einschließungsschichten, die die Polsterung in einer Sandwichstruktur umschließen;
wobei die Polsterung mindestens eine Fasermatte oder ein oder mehrere Schleier aus diskontinuierlichen Seidenfasern umfasst, worin ein oder mehrere Schleier gegebenenfalls in eine Richtung orthogonal zu einer Oberfläche der Schleier überlagert sind, so dass eine durchwirkte dreidimensionale Struktur gebildet wird;
worin das Element **dadurch gekennzeichnet ist, dass** die diskontinuierlichen Fasern eine maximale Länge von ungefähr 200 Millimetern aufweisen und der thermophysikalische Komfort der Polsterung, gemessen gemäß UNI EN ISO 31092:1996, gleich oder größer als 0,6 ist, worin die Polsterung den thermophysikalischen Komfort aufgrund ihrer Dicke und der wärmeisolierenden Kompartimente aufweist, die die diskontinuierlichen Fasern im Inneren der Polsterung erzeugen können.

14. Wärmeisolierendes Element gemäß dem vorherigen Anspruch, worin:
- der thermophysikalische Komfort der Polsterung zwischen 0,7-0,85 liegt;
- ein oder mehrere Faserschleier diskontinuierliche Seidenfasern umfassen, die sich in einer auf die Oberfläche der Faserschleier einfallenden Richtung erstrecken und die die Dicke mindestens eines benachbarten Faserschleier kreuzen, so dass die Schleier verbunden werden; und/oder
- die Dichte der Polsterung im Bereich zwischen 20-1000 g/m2 liegt.

## Revendications

1. Procédé de préparation d'un élément isolant thermique (6), comprenant les étapes suivantes :
- réalisation d'un rembourrage de soie discontinue pratiquement pure, composé d'au moins 90 % en poids de soie ; et
- enfermer ledit rembourrage entre une paire de couches de confinement pour former une structure en sandwich ;
l'étape de réalisation du rembourrage comprenant les étapes suivantes :
i) obtention d'une pluralité de rebuts de soie naturelle ;
ii) macération des rebuts pour dégrader partiellement la séricine et la fibroïne contenues dans ceux-ci et pour que soit obtenue une masse intermédiaire de fibres discontinues ;
iii) soumission du produit de l'étape ii) à des étapes de cardage pour que soient obtenus au moins un mat de fibres, ou un ou plusieurs voiles de fibres de soie discontinues ;
iv) éventuellement superposition et liaison d'une pluralité de voiles de fibres dans une direction orthogonale à la surface desdits un ou plusieurs voiles pour former une structure tridimensionnelle entrelacée ;
ledit procédé étant **caractérisé en ce que** lesdits rebuts de soie naturelle de l'étape i) sont des cocons au moins partiellement soumis à un bobinage, des cocons incomplets, des cocons endommagés par des éléments externes, des cocons utilisés sans chrysalides ayant émergé, des fibres de soie en bourre, des filaments résiduels sur la chrysalide lors de l'achèvement du bobinage dans la production de soie en continu, ou des fibres de soie discontinues d'autres types, et **en ce que** les fibres discontinues de la masse intermédiaire sont des fibres ayant une longueur maximale d'approximativement 200 millimètres.

2. Procédé selon la revendication précédente, comprenant, entre l'étape ii) et l'étape iii), les étapes suivantes :
iia) soumission de la masse intermédiaire à au moins un traitement à l'acide ;
iib) séchage au moins partiel du produit de l'étape iia) ;
iic) neutralisation du produit de l'étape iib) pour consolider les fibres de soie présentes dans ce produit et réduire la charge électrostatique de la masse susdite ;
l'étape iii) étant réalisée sur le produit de l'étape iic) .

3. Procédé selon la revendication précédente, dans lequel l'étape iia) est réalisée en présence d'acide sulfurique, et dans lequel l'étape iic) est réalisée par utilisation de vapeurs d'ammoniac, ou d'une vapeur d'aminé primaire, qui frappe une masse de fibres préalablement centrifugées et partiellement séchées.

4. Procédé selon l'une quelconque des revendications précédentes, dans lequel l'étape ii) comprend les sous-étapes suivantes :
- mélange des rebuts avec un mélange aqueux d'un savon non tensioactif et de carbonate de sodium ;
- mise en réaction des rebuts et du mélange, augmentation de la température jusqu'à environ 80-90°C pendant au moins environ 3 heures ;
- retrait d'au moins une partie de la séricine dégradée hors de la masse de fibres discontinues par lavage à l'eau.

5. Procédé selon la revendication précédente, dans lequel, après l'étape de lavage, le procédé comprend les sous-étapes suivantes :
a) mélange de la masse de fibres discontinues avec de l'eau adoucie, **caractérisée par** 1 -5°f ou avec une solution aqueuse contenant du silicate de sodium ;
b) réalisation d'une ou plusieurs étapes de blanchiment du mélange de la sous-étape a) par utilisation de peroxyde d'hydrogène pur ;
c) rinçage du mélange de la sous-étape b) avec un premier et un deuxième volumes d'eau.

6. Procédé selon la revendication précédente, dans lequel le blanchiment de la sous-étape b) comprend l'addition de peroxyde d'hydrogène pur au mélange de la sous-étape a) à une température d'environ 5 à 15°C, une augmentation progressive de la température à environ 70 à 90°C en environ 50 à 100 minutes, et un temps de réaction à ladite température d'au moins 130 minutes, par exemple d'environ 170 à 190 minutes.

7. Procédé selon la revendication 5 ou 6, dans lequel les premier et deuxième volumes d'eau de la sous-étape c) sont à une température d'environ 5 à 15°C.

8. Procédé selon les revendications 1 à 3, dans lequel ladite étape ii) comprend les sous-étapes suivantes :
- trempage des rebuts avec de l'eau (bi)distillée ;
- mise en réaction des rebuts et de l'eau à une température comprise entre 100 et 150°C et sous une pression de 202,65 à 1013,25 kPa (2 à 10 atm) pendant un temps égal ou supérieur à 40 minutes ;
- élimination de l'eau (bi)distillée contenant au moins une partie de la séricine dégradée, lavage et séchage de la masse de fibres discontinues.

9. Procédé selon l'une quelconque des revendications précédentes, dans lequel l'étape de liaison iv) comprend une ou plusieurs étapes d'aiguilletage, pour transposer les fibres de soie discontinues à travers l'épaisseur des voiles de fibres.

10. Procédé selon l'une quelconque des revendications précédentes, comprenant une ou plusieurs étapes de désinfection de l'une ou des deux des couches de confinement, dans lequel au moins une couche de confinement comprend un textile et dans lequel au moins une étape de désinfection est réalisée sur le fil dudit textile, avant une étape de tissage.

11. Procédé selon l'une quelconque des revendications précédentes, dans lequel les fibres discontinues d'autres types sont des fibres de soie vierge qui ne se prêtent pas elles-mêmes à être traitées avec le système de bobinage de soie pour que soit obtenue une soie continue.

12. Procédé selon l'une quelconque des revendications précédentes, dans lequel au moins une partie des rebuts provient de cocons de la catégorie mûrier de Bombyx Mory, Tussah, Eri, Muga ou leurs mélanges.

13. Elément isolant thermique comprenant un rembourrage de fibres de soie discontinues pratiquement pures, consistant en au moins 90 % en poids de soie, et une paire de couches de confinement qui enferment ledit rembourrage dans une structure en sandwich ;
le rembourrage comprenant au moins un mat de fibres ou un ou plusieurs voiles de fibres de soie discontinues, lesdits un ou plusieurs voiles étant éventuellement superposés dans une direction orthogonale à une surface desdits voiles pour former une structure tridimensionnelle entrelacée ;
ledit élément étant **caractérisé en ce que** les fibres discontinues ont une longueur maximale d'environ 200 millimètres, et le confort thermo-physiologique du rembourrage, mesuré conformément à la norme UNI EN ISO 31092:1996, est égal ou supérieur à 0,6, ledit rembourrage ayant ledit confort thermo-physiologique en vertu de son épaisseur et de compartiments d'isolation thermique que les fibres discontinues sont capables de créer à l'intérieur du rembourrage.

14. Elément isolant thermique selon la revendication précédente, dans lequel :
- le confort thermo-physiologique du rembourrage est compris entre 0,7 et 0,85 ;
- un ou plusieurs voiles de fibres comprennent des fibres de soie discontinues qui s'étendent dans une direction incidente à la surface des voiles de fibres et qui traversent l'épaisseur d'au moins un voile de fibres adjacent de façon à lier lesdits voiles ; et/ou
- la masse volumique du rembourrage est située dans la plage allant de 20 à 1000 g/m².
